# DEMANDE DE BREVET EUROPEEN

(11) **EP 0 877 491 A1**
(43) Date de publication de la demande: **11.11.1998**
(21) Numéro de dépôt: 98410048.7
(22) Date de dépôt: 04.05.1998
(51) Int. Cl.: H04B 1/30, H04B 1/04, H04B 1/16

(54) **Système de transmission radioélectrique à récepteur équipé d'un dispositif de filtrage de bande de réception à résonateur à ondes de surface**

(30) Priorité: 07.05.1997 FR 9705866
(71) Demandeur: R.F. Adeunis, 38190 Crolles (FR)
(72) Inventeur: Champaney, Pascal, 38660 Le Touvet (FR)
(74) Mandataire: Hecké, Gérard

(57) **Abrégé**

Un récepteur radioélectrique comprend une antenne de réception 24 destinée à capter un signal à haute fréquence en provenance d'un dispositif émetteur 12, et un dispositif de filtrage 28 inséré entre l'antenne de réception 24 et un dispositif récepteur 14, et comportant un filtre passe-bande formé par un composant à ondes de surface 36, lequel est identique au résonateur à ondes de surface 22 utilisé pour la fonction d'émission de l'émetteur 12.

Applications : télécommande radio à courte distance pour la domotique et les systèmes de sécurité.

## Description

L'invention est relative à un système de transmission radioélectrique comprenant :
- un dispositif émetteur ayant un oscillateur associé à un élément résonateur en fréquence de référence, destiné à fixer la fréquence d'un signal à haute fréquence envoyé à une antenne d'émission,
- et un dispositif récepteur comportant une antenne de réception couplée par voie radioélectrique à l'antenne d'émission, et reliée électriquement à un circuit de réception à travers un dispositif de filtrage, lequel est constitué par un filtre passe-bande à base d'un composant à ondes de surface.

Il existe aujourd'hui un marché important dans le domaine de la transmission d'ordres par ondes radioélectriques à courte distance. Les applications sont surtout grand public, notamment la télécommande, la sécurité, et la domotique.

Les dispositifs radioélectriques de mise en oeuvre de techniques d'émission / réception radioélectriques doivent être simples, et avoir des prix de revient très bas. Les bandes radio autorisées étant fixées par des règlements, la multiplicité des applications induit une forte occupation des fréquences. La partie du système de transmission pénalisée par cet état de fait est le récepteur, qui doit recevoir de faibles signaux dans un contexte toujours plus encombré.

Les chaînes de réception sont généralement dotées d'un filtrage de bande très sélectif de façon à réduire d'entrée les signaux parasites susceptibles de perturber la transmission.

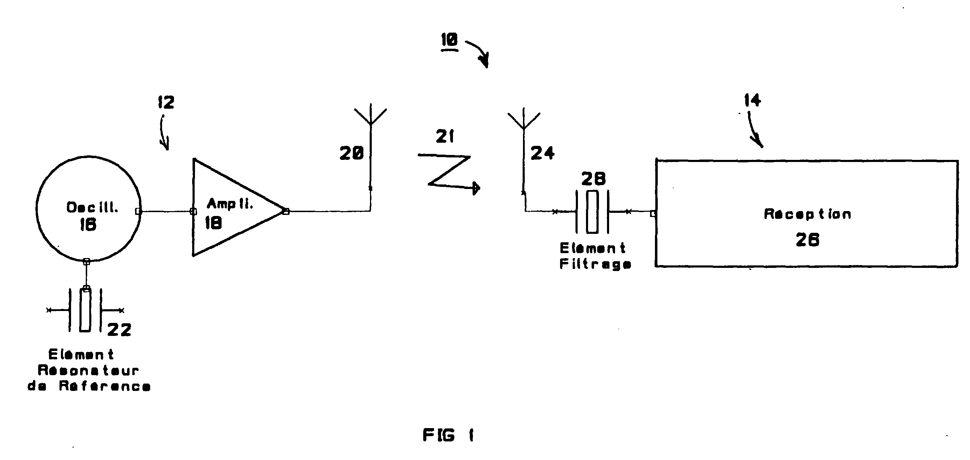

La figure 1 montre le schéma classique d'un système de transmision radioélectrique 10 à fréquence fixe comprenant un dispositif émetteur 12 en liaison avec un dispositif récepteur 14 par des moyens de couplage 21 radioélectrique. Le dispositif émetteur 12 comporte un oscillateur 16 relié par un amplificateur 18 à une antenne d'émission 20. L'oscillateur 16 est composé d'un élément résonateur 22 en fréquence de référence destiné à fixer la fréquence du signal à haute fréquence envoyé vers l'antenne d'émission 20. Le dispositif récepteur 14 est doté d'une antenne de réception 24 reliée à un circuit de réception 26 à travers un dispositif de filtrage 28.

Le dispositif de filtrage 28 est généralement constitué par un filtre passe-bande placé au pied de l'antenne de réception 24, de manière à supprimer tous les signaux parasites avant le traitement dans le circuit de réception 26.

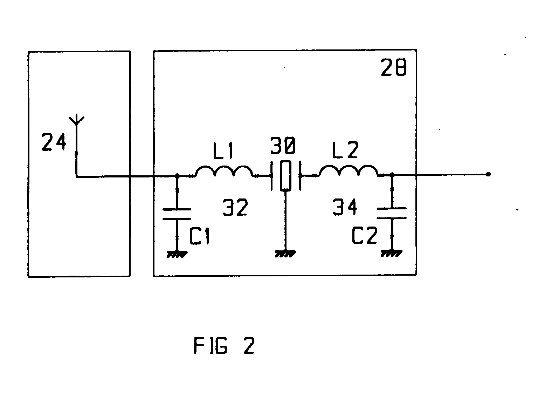

La figure 2 montre un exemple de filtre passe-bande utilisant un filtre à ondes de surface 30. Ce filtre connu permet une bonne sélectivité de bande, tout en restant d'un coût modeste. L'antenne de réception 24 est connectée à l'entrée du composant à ondes de surface 30 par l'intermédiaire d'un premier circuit 32 à inductance L1 et condensateur C1. La sortie du composant à ondes de surface 30 est branchée au circuit de réception 26 à travers un deuxième circuit 34 à inductance L2 et condensateur C2.

La mise en oeuvre d'un tel dispositif de filtrage est compliquée, car elle nécessite deux inductances L1, L2 bobinées, et deux condensateurs C1,C2 en plus du composant à ondes de surface 30. Le coût total de la fonction de filtrage est trop élevé. Un autre inconvénient est la fréquence de réception qui est unique, généralement celle la plus utilisée à ce jour, par exemple une fréquence de base de 433,9 Mhz. L'utilisateur d'un tel dispositif de filtrage ne peut donc choisir de fréquence autre que celle proposée par les fabricants. Les récepteurs équipés de tels filtres sont peu exploitables pour des applications de sécurité, car ils utilisent une fréquence trop encombrée.

Un premier objet de l'invention consiste à réaliser un système de transmission radioélectrique à filtrage efficace de la bande de réception, indépendamment de la fréquence du signal d'émission.

Le système de transmission selon l'invention est caractérisé en ce que le composant à ondes de surface du dispositif de filtrage est formé par un composant ayant les mêmes caractéristiques de réponse en fréquence que l'élément résonateur à ondes de surface du dispositif émetteur, de telle manière que la sélectivité de la bande de réception s'opère au moyen d'un résonateur à onde de surface identique à celui de la fonction d'émission.

Le même composant résonateur à ondes de surface est ainsi utilisé pour la fonction d'émission et la fonction de filtrage au niveau du récepteur. Il en résulte une réduction efficace de tous les signaux parasites susceptibles de gêner le traitement et la discrimination du signal utile reçu par le récepteur.

A chaque type de composant résonateur à ondes de surface correspond une fréquence déterminée du dispositif récepteur. L'utilisateur peut ainsi disposer à son choix de plusieurs fréquences autorisées, il suffit en usine de monter sur la carte électronique, le composant correspondant.

Un deuxième objet de l'invention consiste à réaliser un récepteur radioélectrique équipé d'un dispositif de filtrage perfectionné adaptable à la fréquence du signal d'émission.

Le récepteur radioélectrique selon l'invention comporte une antenne de réception destinée à capter un signal de commande à haute fréquence en provenance d'un dispositif émetteur, et un dispositif de filtrage inséré entre l'antenne de réception et un dispositif récepteur, et comportant un filtre passe-bande formé par un composant à ondes de surface, lequel est identique au résonateur à ondes de surface utilisé pour la fonction d'émission de l'émetteur.

Selon une caractéristique de l'invention le composant à ondes de surface du filtre passe-bande est connecté en parallèle sur une self.

Pour se prémunir des effets de perturbations électromagnétiques, le composant à ondes de surface est avantageusement connecté à l'opposé de l'antenne de réception à un dispositif HF sélectif comprenant un préamplificateur associé à un circuit LC accordé sur la fréquence centrale de filtrage .

D'autres avantages et caractéristiques ressortiront plus clairement de la description qui va suivre d'un mode de réalisation de l'invention, donné à titre d'exemple non limitatif, et représenté aux dessins annexés dans lesquels :
- la figure 1 montre une vue schématique synoptique d'un système de transmission radioélectrique de l'art antérieur,
- la figure 2 représente le schéma du dispositif de filtrage utilisé couramment dans le récepteur du système de transmission de la figure 1 ;
- la figure 3 montre le schéma du dispositif récepteur selon l'invention.

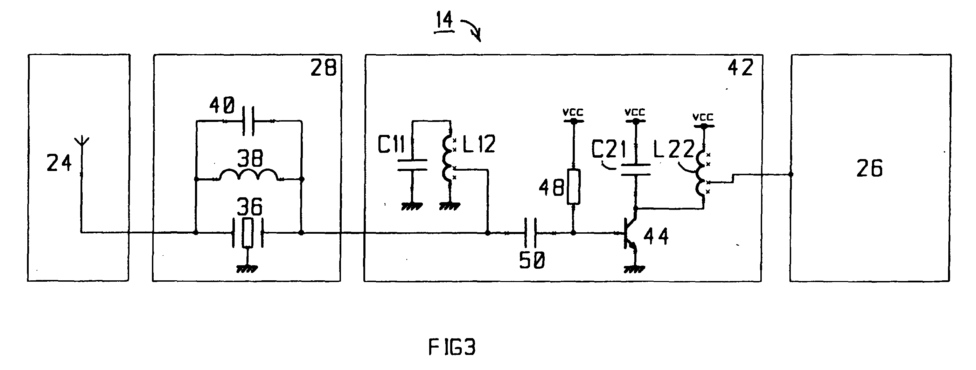

Sur la figure 3, le dispositif de filtrage 28 du récepteur 14 selon l'invention permet d'obtenir la sélectivité de bande au moyen d'un composant à ondes de surface 36 ayant les mêmes caractéristiques de fréquence que l'élément résonateur 22 associé à l'oscillateur du dispositif émetteur 12. En parallèle sur le composant à ondes de surface 36, est connectée une self 38 permettant d'obtenir une réjection efficace d'une fréquence image dans le cas où le circuit de réception 26 est de type hétérodyne. Il est également possible de brancher un condensateur 40 en parallèle sur la self 38.

Les résonateurs à ondes de surface sont généralement disponibles sur une pluralité de fréquences distinctes, par exemple 433,4 MHz, 434,3 MHz en plus de la fréquence de base 433,9 MHz. L'identité des deux composants 22, 36 à ondes de surface permet aussi d'offrir plusieurs fréquences autorisées selon le choix de l'utilisateur.

A chaque fréquence de réception du dispositif de réception 14 correspond un composant à ondes de surface 36 dans le dispositif de filtrage 28.

La self 38 peut être avantageusement imprimée par photogravure sur la carte électronique regroupant tous les composants du dispositif récepteur 14. Le coût de la fonction de filtrage au niveau du dispositif récepteur 14 est aussi réduit au minimum.

La sortie du dispositif de filtrage 28 est connectée à un dispositif HF sélectif 42 comprenant un premier circuit L1C1 accordé sur la fréquence centrale de filtrage, et relié à l'entrée d'un préamplificateur 44, lequel est en liaison avec le circuit de réception 26. La présence du dispositif HF sélectif 42 entre le dispositif de filtrage 28 et le dispositif de réception 26 permet d'augmenter la protection contre les rayonnements électromagnétiques, et d'obtenir un récepteur bon marché conforme aux règlements en vigueur de compatibilité électromagnétique.

Le préamplificateur 44 peut être de tout type connu, par exemple un transistor 46 dont la base est reliée à l'alimentation VCC par une résistance 48, et au premier circuit L1C1 par un condensateur 50. L'émetteur est à la masse, et le collecteur est branché à l'alimentation VCC par un deuxième circuit L2C2.

## Revendications

1. Système de transmission radioélectrique comprenant :
- un dispositif émetteur (12) ayant un oscillateur (16) associé à un élément résonateur (22) en fréquence de référence, destiné à fixer la fréquence d'un signal à haute fréquence envoyé à une antenne d'émission (20),
- et un dispositif récepteur (14) comportant une antenne de réception (24) couplée par voie radioélectrique à l'antenne d'émission (20), et reliée électriquement à un circuit de réception (26) à travers un dispositif de filtrage (28), lequel est constitué par un filtre passe-bande à base d'un composant à ondes de surface (30,36),
caractérisé en ce que le composant à ondes de surface du dispositif de filtrage (28) est formé par un composant (36) ayant les mêmes caractéristiques de réponse en fréquence que l'élément résonateur (22) à ondes de surface du dispositif émetteur (12), de telle manière que la sélectivité de la bande de réception s'opère au moyen d'un résonateur à onde de surface identique à celui de la fonction d'émission.

2. Récepteur radioélectrique comprenant :
- une antenne de réception (24) destinée à capter un signal de commande à haute fréquence en provenance d'un dispositif émetteur (12),
- et un dispositif de filtrage (28) inséré entre l'antenne de réception (24) et un dispositif récepteur (14), et comportant un filtre passe-bande formé par un composant à ondes de surface (30,36),
caractérisé en ce que le composant à ondes de surface (36) du filtre passe-bande est identique au résonateur à ondes de surface (22) utilisé pour la fonction d'émission de l'émetteur (12).

3. Récepteur radioélectrique selon la revendication 2, caractérisé en ce que le composant à ondes de surface (36) du filtre passe-bande est connecté en parallèle sur une self (38).

4. Récepteur radioélectrique selon la revendication 3, caractérisé en ce que la self (38) est imprimée par photogravure sur la carte électronique de support du dispositif récepteur (14).

5. Récepteur radioélectrique selon la revendication 3 ou 4, caractérisé en ce que la self (38) est connectée en parallèle sur un condensateur 40.

6. Récepteur radioélectrique selon la revendication 2 ou 3, caractérisé en ce que le composant à ondes de surface (36) est connecté à l'opposé de l'antenne de réception (24) à un dispositif HF sélectif (42) comprenant un préamplificateur (44) associé à au moins un circuit L1C1 accordé sur la fréquence centrale de filtrage .
